(19) Europäisches Patentamt / European Patent Office / Office européen des brevets

(11) **EP 4 331 769 A1**

(12) **EUROPEAN PATENT APPLICATION**

(43) Date of publication:
**06.03.2024 Bulletin 2024/10**

(21) Application number: **22193876.4**

(22) Date of filing: **05.09.2022**

(51) International Patent Classification (IPC):
**B23K 26/354** $^{(2014.01)}$   **B23K 26/352** $^{(2014.01)}$
**B23K 26/0622** $^{(2014.01)}$   **B23K 101/34** $^{(2006.01)}$

(52) Cooperative Patent Classification (CPC):
**B23K 26/0624; B23K 26/354; B23K 26/3576;**
B23K 2101/35

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Boegli-Gravures SA
2074 Marin-Epagnier (CH)**

(72) Inventors:
• **BOEGLI, Charles
2074 Marin-Epagnier (CH)**
• **DUMITRU, Gabriel
5415 Nussbaumen (CH)**
• **TONIN, Mario
2067 Chaumont (CH)**

(74) Representative: **Weihs, Bruno Konrad et al
André Roland SA
IP Attorneys & Services
Avenue Collonges 21
1004 Lausanne (CH)**

(54) **METHOD FOR POLISHING A SURFACE OF AN EMBOSSING TOOL COMPRISING MICRO-STRUCTURES**

(57)    A method for a laser polishing of a workpiece's surface carrying at least one micro-structure having a determined shape. The workpiece's surface and the micro-structure are made from a same determined material and the laser polishing method is configured to substantially preserve at least the determined shape after its polishing. The method comprises focusing a pulsed femtosecond laser beam in a focus waist on or above the workpiece's surface at a distance in a range from 0 $\mu$m to 1 Rayleigh length on either side of the focus waist in a laser beam propagation axis, measured from the workpiece's surface, the laser beam impinging on the workpiece's surface in a spot; creating a relative movement at a determined scanning speed between the spot and the workpiece's surface configured to scan at least a part of the workpiece's surface, and of the at least one micro-structure. The impinging laser beam heats the workpiece's surface or the at least one micro-structure, whereupon a determined number of successive pulses causes a melting layer zone of the determined material at the workpiece's surface which upon solidification improves the initial roughness of the workpiece's surface, and which is advanced over the workpiece's surface at the determined scanning speed (V) in order to polish the workpiece's surface. Each pulse of the laser delivers a determined fluence at the spot, to the workpiece's surface or the at least one micro-structure, that is below an ablation fluence threshold of the determined material. The melting layer zone is obtained by a partial superposition of the spots produced by corresponding successive pulses, the superposition which enables to reach a melting temperature of the determined material and form the melting layer zone. A pulse duration of pulses in the fs laser beam is greater or equal to 100 fs and inferior or equal to 2000 fs. Thereby the method achieves a polishing and obtaining of the workpiece's surface and the at least one micro-structure with a roughness Ra of equal or greater than 100 nm.

FIG. 2B

## Description

Technical Field

The invention is in the field of manufacturing of a workpiece's surface such as for example an embossing tool, which is designed to carry on the surface micro-structures and to emboss the micro-structures, the latter corresponding in their shape(s) to discrete or arrays of micro-optics components (e.g. micro-lenses), to individual or arrays of micro-channels (e.g., as used in microfluidics or in chip-on-lab type of biological analyses), to conductive micro-traces (e.g., as used in printed electronics), to name a few examples. More precisely, the invention relates to the polishing of a workpiece's surface carrying the micro-structures.

Prior Art

US publication US 2018/0169791 to Miller discloses a system for polishing an optical element with a femtosecond laser beam. The aim of the system is to achieve optical smoothness on a surface of the optical element. The laser system generates converging laser pulses with a pulse duration of less than 900 femtosecond and a relative 3-dimensional positioning of the surface of the optical element and the femtosecond laser beam is controlled by a controller, such that an intensity of the femtosecond laser beam at the surface of the optical element is sufficient to ablate matter at the surface, and a waist of the femtosecond laser beam is outside the optical element and 0,5 - 2,0 Rayleigh lengths away from the surface.

The prior art US publication clearly states that the disclosed polishing method relies on the matter removal from the surface to be polished, and further states that previously used polishing methods (without mentioning any details) involving a femtosecond laser produced surfaces that retained a certain level of roughness, no matter how many times the surface was treated.

As mentioned for the system disclosed in US publication US 2018/0169791, the Rayleigh length is generally defined as the distance along the propagation direction of a laser beam from its focus waist to the plane, where the beam width increases with a factor V2. In the particular case of a laser beam passing through a focusing lens, the Rayleigh length is defined with respect to the beam's focus waist after the lens, i.e., to the focusing plane, and it gives a direct indication on the focusing depth. A laser beam with a longer Rayleigh length diverges slowly after the focusing lens, i.e., its fluence remains substantially constant over a longer path on its propagation. The criterion of optical smoothness corresponds in US publication US 2018/0169791 to a surface roughness of Ra = 10 nm or better, while the initial roughness is around Ra = 50 nm before polishing. One example of an optical element being polished is that of a surface of a contact lens, which can be a scleral contact lens or a hard contact lens customized for a particular wearer's eyeball shape. Such scleral contact lens or hard contact lens may have a size of around 15 mm in diameter and a base curve between 8 and 10 mm. The surface of the scleral contact lens or hard contact lens is continuously positioned by means of the controller such that a focus waist of the femtosecond laser beam remains outside the optical element and 0,5 - 2,0 Rayleigh lengths away from the surface.

In the following, a workpiece is understood to be a working tool, such as an embossing roller or a flat solid surface, or a moulding tool. The workpiece may be integrally made of a hard material or alternatively covered by a layer of the hard material, and hence a workpiece's surface is made out of the hard material. The hard material may be carved or otherwise structured to form micro-structures.

An optical micro-component is a discrete optical element for the visible spectrum (wavelength in a range of roughly 400 nm to 700 nm), having a determined shape and determined geometrical dimensions (height or depth in the range of 2 to 50 $\mu$m and width and/or length in a range of 5 to 100 $\mu$m), made of a transparent polymer material, designed to modify and transform an incident light according to known optical processes, such as waves propagation, refraction, diffraction.

The term of "preserving a shape" in the context of the present description means preserving the geometrical dimensions of an optical micro-component, that are essential to fulfill its function, for example the surface curvature radius for an optical micro-lens.

The invention seeks to provide a method and a system for polishing a workpiece's surface to optical-like smoothness while preserving a shape of existing micro-structures previously carved on the workpiece's surface, including height of depth dimensions, but also width of length dimensions. The micro-structures before polishing have a height or depth in the range of 2 to 50 $\mu$m and width and/or length in a range of 5 to 100 $\mu$m. The micro-structures are aimed for instance at an embossing or a moulding of optical micro-components or at an embossing or a moulding of micro-channels for biological sensors or at an embossing or a printing of micro-circuits on electronic printed boards. Since the dimensions of the micro-structures are orders of magnitude smaller than the size of a contact lens, a person skilled in the art departing from US publication US 2018/0169791, which is concerned only by the polishing of a contact lens, finds no description nor any suggestion about the possibility of preserving such a micro-structure's shape during a process of polishing. Also, US 2028/0169791 teaches to make use of the ablation phenomena, which would be deleterious for preserving any micro-structure, whereas the here disclosed invention relies on the melting and of the redistribution of the melted matter within a surface layer of the workpiece's surface being polished, which has an effect of improving a flatness of the workpiece's surface.

## Summary Of the Invention

In a first aspect, the invention provides a method for a laser polishing of a workpiece's surface carrying at least one micro-structure protuberating from or penetrating in the workpiece's surface and the micro-structure having a determined shape, whereby the workpiece's surface and the micro-structure are made from a same determined material and the laser polishing method being configured to substantially preserve at least the determined shape after its polishing. The method comprises focusing a pulsed femtosecond laser beam in a focus waist on or above the workpiece's surface at a distance in a range from 0 $\mu$m to 1 Rayleigh length on either side of the focus waist in a laser beam propagation axis, measured from the workpiece's surface, the laser beam impinging on the workpiece's surface in a spot; creating a relative movement at a determined scanning speed between the spot and the workpiece's surface configured to scan at least a part of the workpiece's surface, and of the at least one micro-structure. The impinging laser beam heats the workpiece's surface or the at least one micro-structure, whereupon a determined number of successive pulses causes a melting layer zone of the determined material at the workpiece's surface which upon solidification improves the initial roughness of the workpiece's surface, and which is advanced over the workpiece's surface at the determined scanning speed (V) in order to polish the workpiece's surface. Each pulse of the laser delivers a determined fluence at the spot, to the workpiece's surface or the at least one micro-structure, that is below an ablation fluence threshold of the determined material. The melting layer zone is obtained by a partial superposition of the spots produced by corresponding successive pulses, the superposition which enables to reach a melting temperature of the determined material and form the melting layer zone. A pulse duration of pulses in the fs laser beam is greater or equal to 100 fs and inferior or equal to 2000 fs.

Thereby the method achieves a polishing and obtaining of the workpiece's surface and the at least one micro-structure with a roughness Ra of equal or greater than 100 nm.

In a preferred embodiment, a frequency of pulses in the fs laser beam is in the range of 10 MHz to 100 MHz.

In a further preferred embodiment, the creating a relative movement further comprises switching the laser beam on to illuminate the at least one part of the workpiece's surface, and of the at least one micro-structure, and otherwise switching the laser beam off.

In a further preferred embdoiment, the creating a relative movement further comprises switching the laser beam off in an edge zone that is configured to make a transition between the workpiece's surface and the at least one micro-structure.

In a further preferred embodiment, the method further comprises choosing the pulsed femtosecond laser to emit radiation with a wavelength in a range of 1030 nm to 1064 nm.

In a further preferred embodiment, the method further comprises configuring the pulsed femtosecond laser and the focusing such to obtain at the spot a pulse energy of the laser beam interacting with the surface in a range between 0,1 $\mu$J and 5 $\mu$J, and a diameter of the spot is in a range from 10 $\mu$m to 100 $\mu$m.

In a further preferred embodiment, the method further comprises configuring the relative movement to scan line by line in a grid-like pattern.

In a further preferred embodiment, the method further comprises setting the determined scanning speed in a range between 1 m/s and 10 m/s.

In a further preferred embodiment, the at least one micro-structure has a height above the workpiece's surface or depth inside the workpiece's surface equal to or greater than 2 $\mu$m and smaller than or equal to 50 $\mu$m, and lateral dimensions equal to or greater than 5 $\mu$m and smaller than or equal to 100 $\mu$m.

In a further preferred embodiment, the at least one micro-structure has its determined shape configured to be a constituent of any one of the list comprising a discrete micro-optics component, an array of micro-optics components, an array of optical micro-lenses, an individual micro-channel, an array of micro-channels, a conductive micro-trace, a grid of conductive micro-traces.

In a further preferred embodiment, the determined material out of which the workpiece's surface and micro-structures are made is any one of the list comprising hard ceramic, Diamond-Like Coating (DLC), Tantalum Carbide (TaC), CrN, TiN, a metal, a metallic alloy, such as for example a steel alloy, bulk or electroplated chromium or copper, electroplated nickel.

In a further preferred embodiment, an initial roughness Ra is in a range between 0,5 $\mu$m and 2,0 $\mu$m.

In a further preferred embodiment, the melting layer zone is a thin layer having a thickness d in a range of 0,5 $\mu$m to 1 $\mu$m.

In a second aspect, the invention provides a system for polishing of a workpiece's surface carrying at least one micro-structure protuberating from or penetrating in the workpiece's surface and the micro-structure having a determined shape, whereby the workpiece's surface and the micro-structure are made from a same determined material; and the system for polishing being configured to preserve at least the determined shape after its polishing. The system comprises a pulsed femtosecond laser; a focusing lens configured to focus the pulsed femtosecond laser beam in a focus waist on or above the workpiece's surface at a distance in a range from 0 $\mu$m to 1 Rayleigh length on either side of the focus waist, in a laser beam propagation axis, measured from the workpiece's surface, and to make the laser beam impinge on the workpiece's surface in a spot; a workbench configured to hold the workpiece; and a positioning system configured to create a relative movement at a determined scanning speed between the spot and the workpiece's surface on the workbench, to scan the workpiece's surface, with the spot, including the at least one micro-structure. The system for polishing is further configured such that the impinging beam heats the workpiece's surface or the at least one micro-structure, whereby a determined number of successive pulses causes a melting layer zone of the determined material at the workpiece's surface, which is advanced over the workpiece's surface at the determined scanning speed in order to polish the workpiece's surface; each pulse of the laser delivers a determined fluence at the spot to the workpiece's surface, that is below an ablation fluence threshold of the determined material. The positioning system is further configured to enable the melting layer zone by a partial superposition of the spots produced by corresponding successive pulses, the superposition of which enables to reach a melting temperature of the determined material and form the melting layer zone. The system further comprises a laser controlling device configured to set a pulse duration of pulses in the fs laser beam to be greater or equal to 100 fs and inferior or equal to 2000 fs; and a frequency of pulses in the fs laser or beam.

In a further preferred embodiment, the laser controlling device enables to set the frequency of pulses in the range of 10 MHz to 100 MHz.

In a further preferred embodiment, the system for polishing further comprises a control unit configured to synchronise an on- and off-switching of the laser beam, with the relative movement of the workpiece carried out by the positioning system, and the control unit is enabled to switch the laser beam on and off according to a scanning strategy devised to illuminate the at least one part of the workpiece's surface, and the at least one micro-structure, and otherwise switch the laser beam off.

In a further preferred embodiment, the scanning strategy is further devised to leave an edge zone on the workpiece's surface, that is configured to make a transition between the workpiece's surface and the at least one micro-structure, un-polished by turning the laser off.

In a further preferred embodiment, the pulsed femtosecond laser is configured to emit radiation with a wavelength in a range of 1030 nm to 1064 nm.

In a further preferred embodiment, the pulsed femtosecond laser and the focusing lens are configured such to obtain at the spot a pulse energy of the laser beam interacting with the surface in a range between 0,1 $\mu$J and 5 $\mu$J; and a diameter of the spot is in a range from 10 $\mu$m to 100 $\mu$m.

In a further preferred embodiment, the positioning system is further configured to create the relative movement to scan line by line in a grid-like pattern.

In a further preferred embodiment, the positioning system is further configured to set the determined scanning speed in a range between 1 m/s and 10 m/s.

In a further preferred embodiment, the step of heating with the impinging laser beam causes a melting layer zone in form of a thin layer having a thickness **d** in a range of 0,5 $\mu$m to 1 $\mu$m.

Brief Description of the Drawings

The invention will be better understood through the detailed description of preferred embodiments of the invention, and in reference to the appended drawings, wherein

figures **1A** and **1B** contain graphs which illustrate a process by which a melting temperature is reached in material of a workpiece's surface and micro-structures carried thereon;

figures **2A**, **2B**, **2C** and **2D** are used to illustrate a profile cross-section through the laser polishing respectively of a plane surface and of a workpiece's surface carrying micro-structures according to examples of the invention;

figure **3** illustrates two scanning patterns of a workpiece's surface according to an example embodiment of the invention;

figure **4** schematically illustrates the high spatial overlap of subsequent laser pulses along the polishing path, according to an example of the invention;

figure **5** schematically illustrates an example of polishing that preserves edge zones of micro-structures according to a preferred embodiment of the invention;

figure **6** contains a flowchart illustrating a method of laser polishing according to an example embodiment of the invention; and

figure **7** contains a schematic illustration of a system for polishing of a workpiece's surface with at least one micro-structure according to an example embodiment of the invention.

Same references are used throughout the figures to reference same of similar features.

Detailed Description of Preferred Embodiments of the Invention

It has been found that maintaining a fixed distance to the workpiece's surface surrounding the micro-structures, in the field of 0 to 1,0 Rayleigh length allows to apply a substantially constant fluence to the workpiece's surface and to the micro-structures, even though the latter protrude from or penetrate in workpiece's surface. In other words, a distance needn't be adjusted when the polishing laser beam passes over a micro-structure, i.e., it is not necessary to use the controller from the prior art to monitor and maintain the focus waist of the femtosecond laser beam outside of the surface micro-structures, i.e., the workpiece's surface and the surface of the micro-structures. The adjustment is only made once in relation to the workpiece's surface.

A laser polishing set-up is used to polish the workpiece's surface and the micro-structures carried thereon.

An initially structured workpiece's surface, before polishing, comprises micro-structures with a height above the workpiece's surface or depth inside the workpiece's surface

- equal to or greater than 2 $\mu$m and
- smaller than or equal to 50 $\mu$m,

and lateral dimensions

- equal to or greater than 5 $\mu$m and
- smaller than or equal to 100 $\mu$m.

The micro-structures possess properties that depend on their respective shapes, typically shapes of micro-optical components, diffractive gratings, mirror-like reflecting surfaces, etc. The shapes are paramount for the envisaged use of the embossings, or mouldings achieved with the micro-structures.

The material out of which the workpiece's surface and the micro-structures are made may be for example hard ceramic, for example hard ceramic of the type DLC (Diamond-Like Coating), TaC (Tantalum Carbide), CrN, TiN...

In a further preferred embodiment, the material may be a metal, a metallic alloy, such as for example a steel alloy, bulk or electroplated chromium or copper, electroplated nickel...

The micro-structures are initially rough, with a roughness of about 0,8 - 1,0 $\mu$m, as a result of the structuring of the workpiece's surface, for example by carving. This makes it necessary to proceed to a polishing process in order for the micro-structures to be usable in the end application, i.e., embossing of moulding thereof to obtain optical components.

It turns out that a mechanical polishing is impossible because the dimensions of the micro-structures are too small, and the respective shapes of the micro-structures too varied from one to the other. It is important that the polishing guarantees a determined result for a final shape of each micro-structure.

A polishing making use of a continuous wave $CO_2$ laser is a commonly used technique. However, the workpiece's zone that is thermally affected in this technique is too large for the end application in that embossing or moulding of the polished micro-structure(s) doesn't allow to obtain the desired micro-optical components. In addition, the thermally affected zone may alter physical and chemical properties of the hard ceramics, out of which the micro-structures are made. This is for example the case for DLC where the effect of the temperature may alter a larger and more significant part of the hard ceramic in its quality, and reduce its hardness.

It is therefore indicated to limit a melting zone as much as possible. In order to achieve this, femtoseconds lasers are used. These lasers are typically used for their precision in cutting or in fine material ablation, because the thermal effects are limited. The laser pulses are so energetic during ultrashort time lapses that the material is ablated at the beam incidence and that only little heat is produced in the workpiece. In order to use these lasers in a melting mode, the lasers are adjusted in such a manner that the fluence of a single pulse does not exceed the maximum fluence before ablation of the material out of which the micro-structure is made. It is then necessary to set the shooting frequency of the laser, typically in the 10 MHz and 100 MHz-range in order to transfer some heat to the surface to be melted. The heat accumulates and makes the material melt at the surface on a very little depth, i.e., a depth in the order of a $\mu$m thanks to the very high precision of the heat quantity delivered by each pulse.

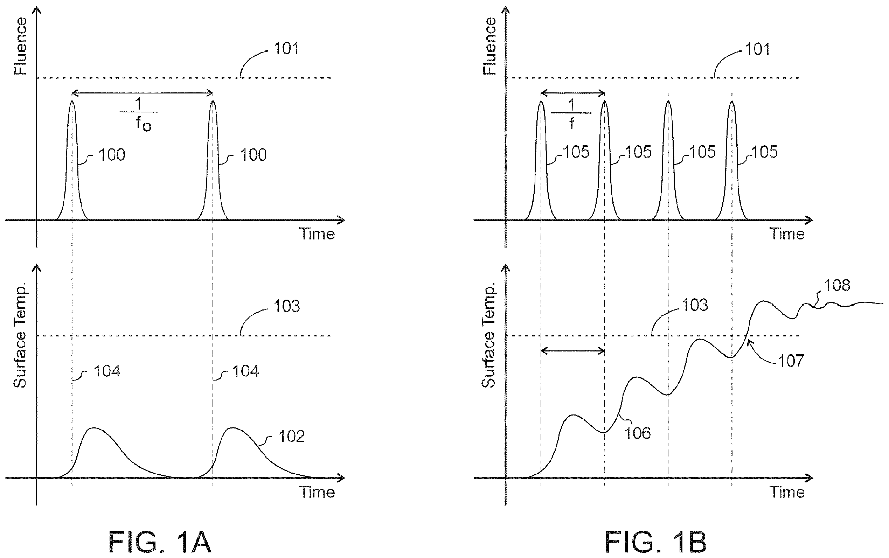

Figures **1A and 1B** are used to illustrate the process by which a melting temperature **103** of the material of a workpiece's surface and micro-structures carried thereon, is reached while staying below of the fluence threshold for ablation. In figure **1A** one graph shows the laser **fluence** for 2 laser pulses **100** at a pulse frequency $f_0$, and how the **fluence** remains below an ablation threshold **101** of the material, while the other graph shows a surface temperature over time **102** at the workpiece's surface, and also the melting temperature threshold **103** of the material. The correspondence between the two graphs for the pulses is shown by dotted lines **104** connecting the two graphs. In a first case of figure **1A** the frequency $f_0$ of the laser is too small, for example around 0,2 MHz, and since the fluence remains below the fluence of ablation threshold **101**, the material never reaches its melting temperature **103**. The polishing effect may not be obtained. In figure **1B** one graph shows the laser fluence for 4 laser pulses **105** at a pulse frequency **f** which may be 50 to 100 times greater than $f_0$, e.g., between 10 MHz and 100 MHz, preferably 50 MHz, and how this remains below the ablation threshold **101**, while the other graph shows the temperature over time **106** at the workpiece's surface, and also the melting temperature threshold **103**. In the second case of figure **1B** where the frequency **f** of the laser is in the 10 MHz to 100 MHz range, the laser pulses are close enough from each other that the heat released by one pulse to the workpiece's surface may not dissipate before the next pulse arrives. Hence the surface temperature at the surface of the workpiece rises gently until it reaches **107** the melting temperature **103**, despite the fact that the fluence of each pulse is below the fluency of ablation threshold. Following the reaching **107** of the melting temperature, the melting persists **108** for consecutive laser pulses (not illustrated in figure **1B**).

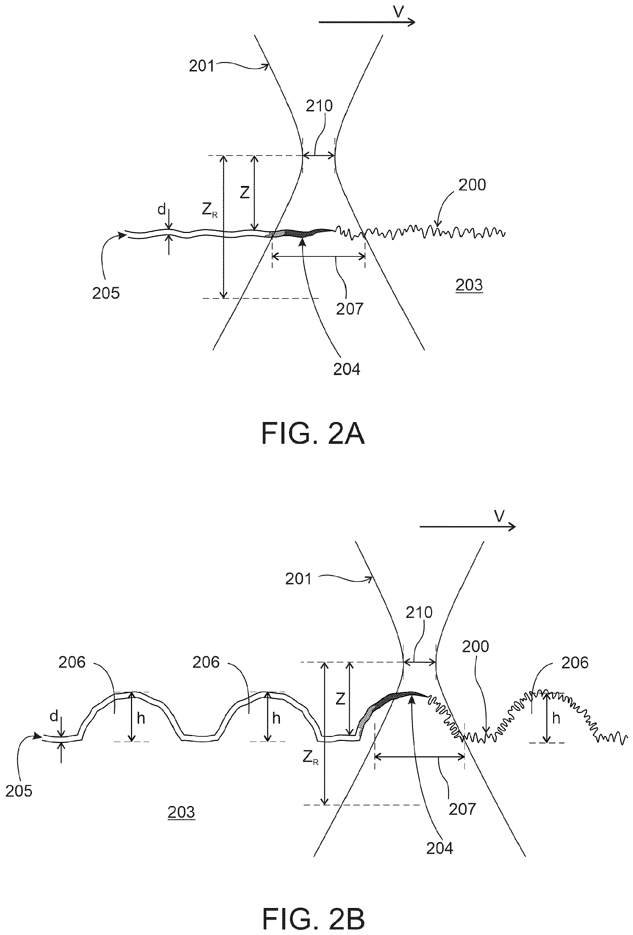

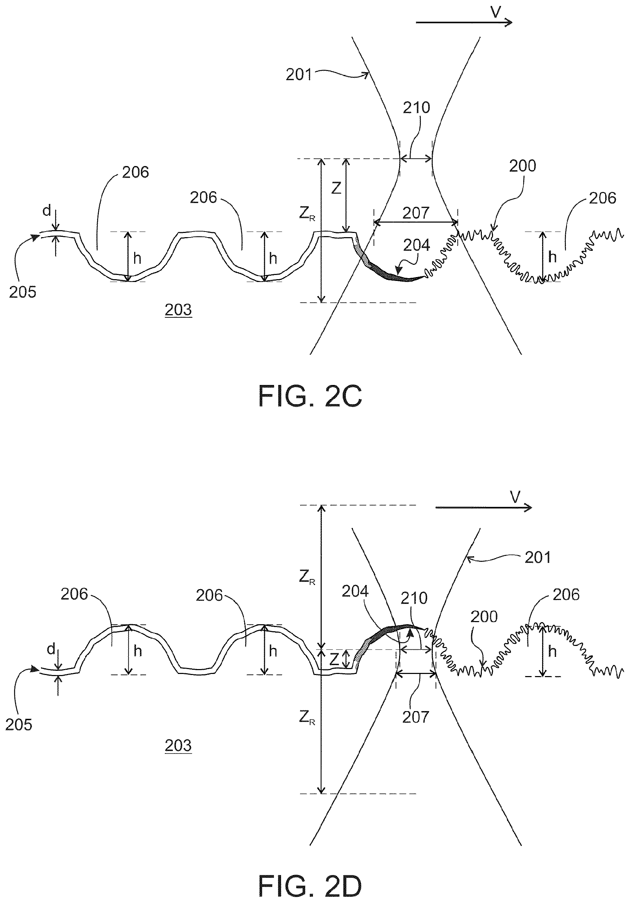

Figures **2A**, **2B**, **2C**, and **2D** are used to illustrate a profile cross-section through the laser polishing respectively of a plane surface and of a workpiece's surface carrying micro-structures according to preferred embodiments of the invention. The initially unpolished workpiece's surface **200** has an initial roughness that the polishing process aims to reduce. The initial roughness Ra may be in a range between 0,5 $\mu$m and 2,0 $\mu$m. The laser beam **201** passes through a focusing lens (not illustrated in the figures) and it is un-focused relatively to the workpiece's surface **200** by a height **Z** which is smaller than a Rayleigh length $Z_R$, i.e., the height **Z** must remain equal to or below the Rayleigh length $Z_R$, and would typically be set at around **Z** = 0,5 $\times$ $Z_R$. This allows to melt a melting layer zone **204** of the workpiece's **203** surface **200** under the laser beam **201**. It is noted that the Rayleigh length $Z_R$ is not represented in proper proportions in the figures, this having been done deliberately for a better readability.

In preferred embodiments, the value of **Z** may be any one of items in the list comprising at least the following values in $\mu$m: 0, 50, 100, 200, 400.

The melt layer zone **204** is advanced in direction of speed **V** along the workpiece's surface **200** in order to polish it, this process leaving a thin layer **205** affected by the heat, the thin layer **205** having a thickness **d** of a few hundred nanometers to 1 $\mu$m, depending mainly on laser parameters and values of speed of advancing **V.**

The femtosecond laser has a wavelength in the range of 1030 nm to 1064 nm (not illustrated in the figures). A pulse duration of the laser is in the range of 100 fs to 2000 fs. A frequency of the laser is in the range of 10 MHz and 100 MHz. An average power of the laser on the workpiece's surface **200** is dependent on the fluence to be reached on the surface. It is important not to reach the threshold ablation fluence over which ablation happens, or in other words, the ablation threshold, as illustrated in figures **1A** and **1B** with reference **101**. In a preferred example embodiment, a focusing lens (not illustrated in figures **2A**, **2B**, **2C** and **2D**) causes the laser beam **201** to converge on a spot **207** and to have a focus waist **210** of for example 2 $\times$ $w_0$ = 25 $\mu$m, wherein $w_0$ corresponds to half of the focus waist's diameter, and this produces a depth of focusing in the order of for example 950 $\mu$m, corresponding to twice the Rayleigh length $Z_R$ ( $2Z_R = (2\pi w_0^2)/(\lambda)$ ). An incidence angle of the laser beam **201** remains constant, i.e., it doesn't change as a function of any micro-structure **206**'s shapes on the workpiece's surface **200**. The laser beam **201** remains incident perpendicularly to the workpiece's surface **200**.

The laser beam **201** may be de-focused relative to the workpiece's surface **200**. In a further preferred embodiment, a focal point **210** is located at the height **Z** in a range from 0 $\mu$m to 500 $\mu$m from the workpiece's surface **200** to polish. A particularly advantageous result is obtained at a de-focusing distance of substantially 200

$\mu$m.

The micro-structures **206** have a height **h**. The Rayleigh length $Z_R$ is adjusted such that the whole of height **h** remains in the laser beam **201** in an area of the laser beam **201** delimited by the Rayleigh length $Z_R$, on both sides of the focus waist **210** in direction of the laser beam **201**, at all times. As illustrated in figure 2D, for a case in which the height **Z** is smaller than the height **h** of the micros-structures **206**, the whole of height **h** still remains in the laser beam **201** in the area of the laser beam **201** delimited by the Rayleigh length $Z_R$, on both sides of the focus waist **210**, the focus waist **210** being located in the height **h** of the micro-structure **206** at a time when the laser beam **201** scans the micro-structure **206**. A fluence in the laser beam measured anywhere in the interval of the 2 Rayleigh lengths $Z_R$ on both sides of the focus waist **210** is sufficient to obtain a constant polishing quality.

While figure **2B** represents micro-structures **206** which protuberate from the workpiece's surface **200**, and have a convex shape, figure **2C** represents micro-structures **206** which penetrate in the workpiece's surface **200** and have a concave shape.

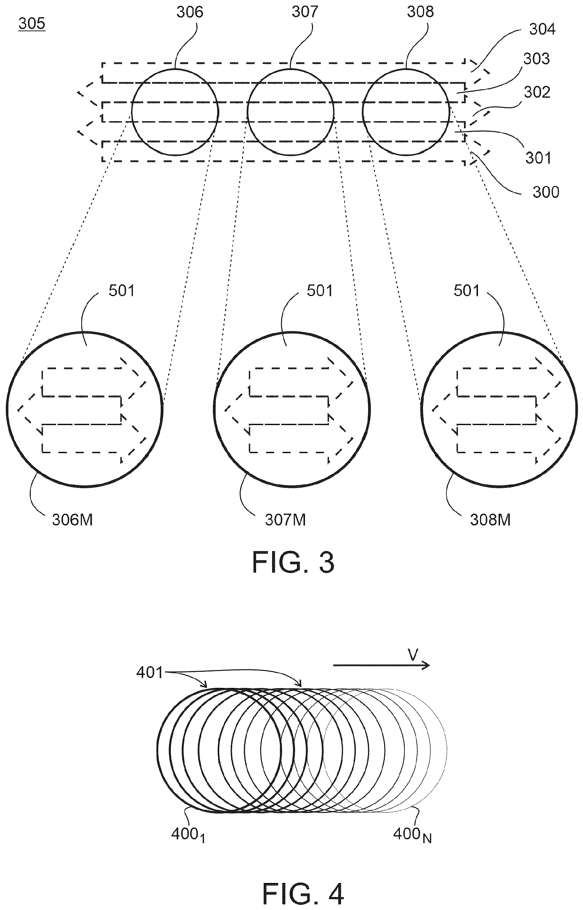

The workpiece's surface and the micro-structures are scanned line by line in a grid-like pattern **305** as illustrated in figure 3. The grid-like pattern **305** in this example is presented by 5 lines **300** to **304**, whereby a scanning direction is represented by corresponding arrows.

In a preferred embodiment, the scanning may also be done by scanning each line **300** to **304** in each opposite direction, i.e., back and forth, before proceeding to a next line, e.g., to the next adjacent line. This is not illustrated in figure **3**.

A scanning speed or speed of advancing **V** may for example be between 1 m/s and 10 m/s in order to obtain a superposition of successive laser pulses as schematically represented in figure **4**, which illustrates the superposition of multiple laser spots $400_1$ to $400_N$ forming an oval shaped illumination pattern **401**. The greater or higher the superposition is, the higher the maximal temperature in the material illuminated (material not illustrated) gets. A scanning speed may need to be dependent on the material of the workpiece's surface and its micro-structures, and on the desired result, i.e., the desired polishing roughness.

In a preferred embodiment, following parameters are used or achieved:

- the polishing spot moves with 0,1 $\mu$m between two adjacent spots corresponding to two successive laser pulses; in term of overlap, there is an overlap of 99.6% between two adjacent spots. In other words, when considering the illustration of figure **4**, this means that the distance between two adjacent spots $400_i$ and $400_{i+1}$ is 0,1 $\mu$m as measured from a displacement of the spots' centers (not illustrated in figure **4**);

- for a 25 μm path along a polishing path, one may need 5 μs, leading to a value of 250 successive pulses that impinge on the workpiece's surface during this time interval;
- an incident fluence is 0,06 J/cm$^2$. However, values between 0,01 J/cm$^2$ and 0,1 J/cm$^2$ may alternatively also be used, as long they do not reach the ablation threshold of the workpiece's material;
- the laser beam scans twice the workpiece's surface to be polished, e.g., each scanning line is scanned back and forth before passing to a next adjacent scanning line; an increasing of the number of passes of the laser beam over the workpiece's surface above this twice scanning, may not yield any further improvement of the polishing result.

One advantage of the laser polishing according to the invention is that a workpiece's surface micro-topography doesn't need to be followed and continuously adjusted in order to polish the micro-structures **206**, in case the height h of the micro-structures **206** remains below 500 μm. In one of the preferred embodiments described herein above, this height **h** approximately corresponds to the Rayleigh length $Z_R$.

The laser polishing according to the invention has a further advantage in that it preserves the determined shape of each of the micro-structures **206**. The micro-structures **206** may correspond to micro-optical components to be embossed or moulded, and each may have the shape of micro-components with respective curve(s). Alternatively, the determined shape may be that of a discrete micro-optics component, an array of micro-optics components, an array of optical micro-lenses, an individual micro-channel, an array of micro-channels, a conductive micro-trace.

If the profiles of the micro-structures are compared from before and after the laser polishing, a change of an edge zone that is configured to make a transition between the workpiece's surface and the micro-structure may be affected by the polishing.

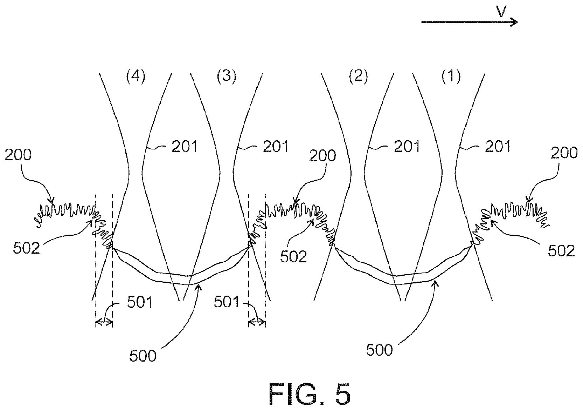

In order to prevent the change of shape in the edge zone, in a preferred embodiment illustrated in figure **5**, the polishing laser beam **201** selectively impinges, e.g., by being turned on and off as appropriate, during scanning according to the speed **V**, on micro-structures **500** previously carved in the workpiece's surface **200** (similar to the micro-structures **206** in figure **2C**), starting at **201 (1)** respectively **201 (3)**), and ending at **201 (2)** respectively **201 (4)**, hence polishing the micro-structures **500** between the edge zones **501**. The edge zones **501** measure preferably 10 μm, most preferably 5 μm away from sharp edges **502**. By doing this, the polishing effect is fully effective on rounded parts of the micro-structures **500** and there is no laser melting effect in the region of sharp edges **502** and edge zones **501** - which keeps its initial roughness and doesn't modify its geometrical dimensions. As an example, for a given carved micro-lens, the diameter of the circular zone, where the laser beam **201** impinges may comprise 60% of the micro-lens diameter. The starting and ending of the polishing may be obtaining by switching the laser beam on and off respectively.

Returning to figure **3**, circles **306**, **307** and **308** schematically represent locations of individual micro-structures on a workpiece's surface. Their respective magnified view each show the scanning lines of the laser beams, whereby each arrow therein represents a section of the laser scanning, each section during which the laser is on and polishes the micro-structure. Hence the laser is off in the edge zone **501**.

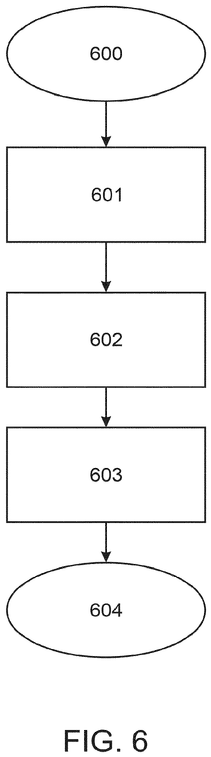

Figure **6** contains a flowchart illustrating an example embodiment of a method for a laser polishing of a workpiece's surface carrying at least one micro-structure **600** protuberating from or penetrating in the surface and having a determined shape according to the invention. Further the workpiece's surface and the micro-structure are made from a same determined material. The laser polishing method is configured to preserve at least the determined shape. The method comprises a step of focusing **601** a pulsed femtosecond laser beam on or above the workpiece's surface at a distance in the range from 0 μm to the Rayleigh length from the workpiece's surface, the laser beam impinging on the workpiece's surface in a spot. The method further comprises a step of creating a relative movement **602** at a determined scanning speed between the spot and the workpiece's surface to scan the workpiece's surface, with the spot, including the at least one micro-structure, and a step of heating **603** with the impinging laser beam the workpiece's surface or the at least one micro-structure, whereby a determined number of successive pulses causes a melting layer zone of the determined material at the surface, which is advanced over the workpiece's surface of the determined material at the determined scanning speed in order to polish the workpiece's surface. In the method each pulse of the laser delivers a determined fluence at the spot to the surface, that is below an ablation fluence threshold of the determined material; the melting layer zone is obtained by the partial superposition of the spots produced by corresponding successive pulses, the superposition which enables to reach a melting temperature of the determined material. Thereby a polished workpiece's surface and the at least one micro-structure **604** with a roughness as low as 100 nm ($R_a$ value) are obtained.

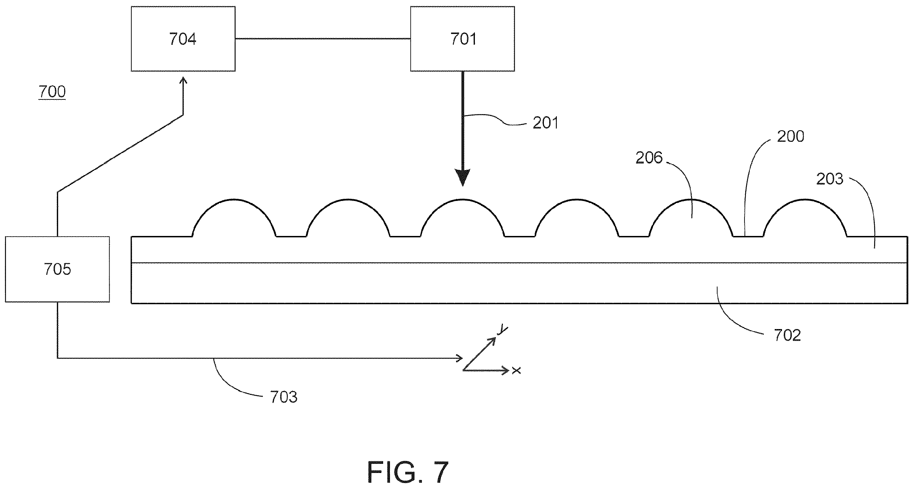

Referring now to figure **7**, this illustrates schematically a system for polishing **700** of a workpiece **203**'s surface **200** with at least one micro-structure **206** protuberating from the workpiece's surface **200** according to an example embodiment of the invention. The micro-structure **206** has a determined shape. As previously stated, the workpiece's surface **200** and the micro-structure(s) **206** are made from a same determined material. The system for polishing **700** is configured to preserve the determined shape after its polishing. The system for polishing **700** comprises a pulsed femtosecond laser **701**, a focusing lens (not illustrated in the figure) configured to focus the pulsed femtosecond laser beam **201** on or above the workpiece's surface **200** at a distance in the range from 0 μm to a Rayleigh length (not illustrated in the figure) in the laser beam **201**, measured from the workpiece's surface, and make the laser beam **201** impinge on the workpiece's surface in a spot (not illustrated in the figure). The system **700** further comprises a workbench **702** configured to hold the workpiece **203**, and a positioning system **703** configured to create a relative movement at a determined scanning speed between the spot and the workpiece's surface on the workbench, to scan the workpiece's surface **200**, with the spot, including the at least one micro-structure **206**. The system for polishing **700** is further configured such that the impinging beam heats the workpiece's surface or the at least one micro-structure, whereby a determined number of successive pulses causes a melting layer zone (not illustrated in the figure) of the determined material at the workpiece's surface, which is advanced over the workpiece's surface at the determined scanning speed in order to polish the workpiece's surface. Each pulse of the laser delivers a determined fluence at the spot to the workpiece's surface, that is below an ablation fluence threshold of the determined material. The positioning system **703** is further configured to enable the melting layer zone by a partial superposition of the spots produced by corresponding successive pulses, the superposition which enables to reach a melting temperature of the determined material and form the melting layer zone. The system **700** further comprises a laser controlling device **704** configured to set a pulse duration of pulses in the fs laser beam to be greater or equal to 100 fs and inferior or equal to 2000 fs, and a frequency of pulses in the fs laser or beam in the range 10 MHz and 100 MHz. The system for polishing further comprises a control unit **705** configured to synchronise the on- and off-switching of the laser beam 201 with the relative movement of the workpiece **206** carried out by the positioning system **703**.

In a preferred embodiment, the scanning movement and the scanning speed can be generated by keeping the laser beam **201** and focusing system **701** fixed and by moving the workbench **702** in front of the laser beam, or alternatively by moving the focused laser beam **201** delivered by **701** on the workpiece's surface **200** kept fixed by the positioning system **703**, or by combinations thereof. In a preferred embodiment, where the workpiece **203** is an embossing roller, the laser beam **201** executes a translation movement, whereas the positioning systems **703** rotates the workbench **702**, hence the workpiece **203** (i.e., the roller) in front of the laser beam **201**.

One advantage of the invention is that it enables the once at a time polishing of individual or of arrays of micro-structures at the time of manufacturing of the embossing or moulding tool. On the one hand, this grants that after the polishing step all the micro-structures will have similar surface roughness values and, on the other hand, eliminates the need to polish the individual micro-components obtained through the embossing with an unpolished embossing tool or through the moulding with an unpolished moulding tool.

A further advantage of the invention, in the preferable case when the carving of the micro-structures into the embossing or moulding tool is carried out using a laser beam, is that a manufacturing using the same laser machining facility and, more preferably, the same laser sources, i.e., without changeover, becomes possible. This simplifies the industrial production of polished embossing or moulding tools carrying micro-structures (for producing micro-components afterwards) and makes it more reliable, by avoiding misalignment errors.

**Claims**

1. A method for a laser polishing of a workpiece's surface (200) carrying at least one micro-structure (206; 600) protuberating from or penetrating in the workpiece's surface and the micro-structure having a determined shape,

    whereby

        the workpiece's surface and the micro-structure are made from a same determined material;
        the laser polishing method being configured to substantially preserve at least the determined shape after its polishing,
        the method comprising
        focusing (601) a pulsed femtosecond laser beam (201) in a focus waist on or above the workpiece's surface at a distance in a range from 0 μm to 1 Rayleigh length on either side of the focus waist in a laser beam propagation axis, measured from the workpiece's surface, the laser beam impinging on the workpiece's surface in a spot (207); creating a relative movement (602) at a determined scanning speed between the spot and the workpiece's surface configured to scan at least a part of the workpiece's surface, and of the at least one micro-structure;

    whereby

        the impinging laser beam heats (603) the workpiece's surface or the at least one micro-structure, whereupon a determined number of successive pulses causes a melting layer zone (204) of the determined material at the workpiece's surface which upon solidification improves the initial roughness of the workpiece's surface, and which is advanced over the workpiece's surface at the determined scanning speed (V) in order to polish the workpiece's surface;
each pulse of the laser delivers a determined fluence at the spot, to the workpiece's surface or the at least one micro-structure, that is below an ablation fluence threshold (101) of the determined material;
the melting layer zone is obtained by a partial superposition of the spots $(400_i)$ produced by corresponding successive pulses, the superposition which enables to reach a melting temperature (103) of the determined material and form the melting layer zone;
a pulse duration of pulses in the fs laser beam is greater or equal to 100 fs and inferior or equal to 2000 fs;
thereby polishing and obtaining (604) the workpiece's surface and the at least one micro-structure with a roughness Ra of equal or greater than 100 nm.

2. The method for a laser polishing according to claim 1, wherein
a frequency of pulses in the fs laser beam is in the range of 10 MHz to 100 MHz.

3. The method for a laser polishing according to claim 1, wherein
the creating a relative movement further comprises switching the laser beam on to illuminate the at least one part of the workpiece's surface, and of the at least one micro-structure, and otherwise switching the laser beam off.

4. The method for a laser polishing according to claim 3, wherein
the creating a relative movement further comprises switching the laser beam off in an edge zone that is configured to make a transition between the workpiece's surface and the at least one micro-structure.

5. The method of any one of claims 1 to 4, further comprising
choosing the pulsed femtosecond laser to emit radiation with a wavelength in a range of 1030 nm to 1064 nm.

6. The method of any one of claims 1 to 5, further comprising
configuring the pulsed femtosecond laser and the focusing such to obtain at the spot a pulse energy of the laser beam interacting with the surface in a range between 0,1 $\mu$J and 5 $\mu$J, and
a diameter of the spot is in a range from 10 $\mu$m to 100 $\mu$m.

7. The method of any one of claims 1 to 6, further comprising

configuring the relative movement to scan line by line in a grid-like pattern.

8. The method of any one of claims 1 to 7, further comprising
setting the determined scanning speed in a range between 1 m/s and 10 m/s.

9. The method of any one of claims 1 to 8, wherein the at least one micro-structure has a height above the workpiece's surface or depth inside the workpiece's surface

• equal to or greater than 2 $\mu$m and
• smaller than or equal to 50 $\mu$m,

and lateral dimensions

• equal to or greater than 5 $\mu$m and
• smaller than or equal to 100 $\mu$m.

10. The method of any one of claims 1 to 9, wherein the at least one micro-structure has its determined shape configured to be a constituent of any one of the list comprising a discrete micro-optics component, an array of micro-optics components, an array of optical micro-lenses, an individual micro-channel, an array of micro-channels, a conductive micro-trace, a grid of conductive micro-traces.

11. The method of any one of claims 1 to 10, wherein the determined material out of which the workpiece's surface and micro-structures are made is any one of the list comprising hard ceramic, Diamond-Like Coating (DLC), Tantalum Carbide (TaC), CrN, TiN, a metal, a metallic alloy, such as for example a steel alloy, bulk or electroplated chromium or copper, electroplated nickel.

12. The method of any one of claims 1 to 11, wherein an initial roughness Ra is in a range between 0,5 $\mu$m and 2,0 $\mu$m.

13. The method of any one of claims 1 to 12, wherein the melting layer zone is a thin layer having a thickness d in a range of 0,5 $\mu$m to 1 $\mu$m.

14. A system for polishing of a workpiece's surface carrying at least one micro-structure protuberating from or penetrating in the workpiece's surface and the micro-structure having a determined shape,

whereby

the workpiece's surface and the micro-structure are made from a same determined material;
the system for polishing being configured to preserve at least the determined shape after its polishing;

the system comprising

a pulsed femtosecond laser;
a focusing lens configured to focus the pulsed femtosecond laser beam in a focus waist on or above the workpiece's surface at a distance in a range from 0 µm to 1 Rayleigh length on either side of the focus waist, in a laser beam propagation axis, measured from the workpiece's surface, and to make the laser beam impinge on the workpiece's surface in a spot;
a workbench configured to hold the workpiece;
a positioning system configured to create a relative movement at a determined scanning speed between the spot and the workpiece's surface on the workbench, to scan the workpiece's surface, with the spot, including the at least one micro-structure;
the system for polishing further configured such that
the impinging beam heats the workpiece's surface or the at least one micro-structure, whereby a determined number of successive pulses causes a melting layer zone of the determined material at the workpiece's surface, which is advanced over the workpiece's surface at the determined scanning speed in order to polish the workpiece's surface;
each pulse of the laser delivers a determined fluence at the spot to the workpiece's surface, that is below an ablation fluence threshold of the determined material;
the positioning system being further configured to enable the melting layer zone by a partial superposition of the spots produced by corresponding successive pulses, the superposition of which enables to reach a melting temperature of the determined material and form the melting layer zone;
and the system further comprising a laser controlling device configured to set

a pulse duration of pulses in the fs laser beam to be greater or equal to 100 fs and inferior or equal to 2000 fs; and
a frequency of pulses in the fs laser or beam.

15. The system of claims 14, wherein

the system for polishing further comprises a control unit configured to synchronise an on- and off-switching of the laser beam, with the relative movement of the workpiece carried out by the positioning system, and
the control unit is enabled to switch the laser beam on and off according to a scanning strategy devised to illuminate the at least one part of the workpiece's surface, and the at least one micro-structure, and otherwise switch the laser beam off.

16. The system of claim 15, wherein
the scanning strategy is further devised to leave an edge zone on the workpiece's surface, that is configured to make a transition between the workpiece's surface and the at least one micro-structure, un-polished by turning the laser off.

FIG. 1B

FIG. 1A

FIG. 2A

FIG. 2B

FIG. 2C

FIG. 2D

FIG. 3

FIG. 4

FIG. 5

FIG. 6

FIG. 7

Europäisches
Patentamt

European
Patent Office

Office européen
des brevets

# EUROPEAN SEARCH REPORT

Application Number

EP 22 19 3876

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2020 214259 A1 (FRAUNHOFER GES FORSCHUNG [DE]) 12 May 2022 (2022-05-12) | 1-3,5,6, 8-15 | INV. B23K26/354 |
| Y | * figures 1-3 * * paragraph [0003] - paragraph [0004] * * paragraph [0022] * * paragraph [0027] - paragraph [0040] * * paragraph [0046] - paragraph [0048] * ----- | 4,16 | B23K26/352 B23K26/0622 ADD. B23K101/34 |
| X | DE 10 2019 103960 A1 (FRAUNHOFER-GESELLSCHAFT ZUR FÖRDERUNG DER ANGEWANDTEN FORSCHUNG EV [DE) 20 August 2020 (2020-08-20) | 1-3,5-15 | |
| Y | * figures 1-4 * * paragraph [0003] * * paragraph [0012] * * paragraph [0020] - paragraph [0028] * * paragraph [0033] - paragraph [0036] * * paragraph [0039] * ----- | 4,16 | |
| Y | DE 102 28 743 B4 (FRAUNHOFER GES FORSCHUNG [DE]) 4 May 2005 (2005-05-04) * paragraph [0036] * ----- | 4,16 | TECHNICAL FIELDS SEARCHED (IPC) B23K |
| A | US 2018/169791 A1 (MILLER GREGORY DAVID [US]) 21 June 2018 (2018-06-21) * figure 3 * * paragraph [0028] * ----- | 1 | |
| A | DE 10 2020 000078 B3 (MITTWEIDA FH [DE]) 24 June 2021 (2021-06-24) * the whole document * ----- | 1 | |

The present search report has been drawn up for all claims

| Place of search | Date of completion of the search | Examiner |
|---|---|---|
| Munich | 27 February 2023 | Prager, Emanuel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 19 3876

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2023

| Patent document cited in search report | Publication date | Patent family member(s) | | Publication date |
|---|---|---|---|---|
| DE 102020214259 A1 | 12-05-2022 | NONE | | |
| DE 102019103960 A1 | 20-08-2020 | NONE | | |
| DE 10228743 B4 | 04-05-2005 | AT | 339527 T | 15-10-2006 |
| | | DE | 10228743 A1 | 29-01-2004 |
| | | EP | 1516068 A1 | 23-03-2005 |
| | | ES | 2273034 T3 | 01-05-2007 |
| | | US | 2006081573 A1 | 20-04-2006 |
| | | WO | 2004003239 A1 | 08-01-2004 |
| US 2018169791 A1 | 21-06-2018 | NONE | | |
| DE 102020000078 B3 | 24-06-2021 | NONE | | |

EPO FORM P0459

For more details about this annex : see Official Journal of the European Patent Office, No. 12/82

**REFERENCES CITED IN THE DESCRIPTION**

**Patent documents cited in the description**

- US 20180169791 A, Miller
- US 20280169791 A